# EUROPEAN PATENT SPECIFICATION

(11) **EP 3 300 314 B1**
(45) Date of publication and mention of the grant of the patent: **13.11.2019**
(21) Application number: 16796116.8
(22) Date of filing: 19.05.2016
(51) Int. Cl.: H04L 12/70, G06F 21/56, H04L 29/06

(54) **PACKET ANALYSIS DEVICE AND PACKET ANALYSIS METHOD**
PAKETANALYSEVORRICHTUNG UND PAKETANALYSEVERFAHREN
DISPOSITIF D'ANALYSE DE PAQUET ET PROCÉDÉ D'ANALYSE DE PAQUET

(30) Priority: 21.05.2015 JP 2015103591
(43) Date of publication of application: 28.03.2018
(73) Proprietor: NEC Corporation, Tokyo 108-8001 (JP)
(72) Inventor: SEJIMO, Masaki, Tokyo 108-8001 (JP)
(74) Representative: Betten & Resch
(86) International application number: PCT/JP2016/002437
(87) International publication number: WO 2016/185721

(56) References cited:
- JP-A- 2013 038 610
- JP-A- 2015 065 601
- US-A1- 2008 168 558
- US-A1- 2010 154 059

## Description

### [Technical Field]

The present invention relates to a packet analysis device and a packet analysis method, and particularly relates to a Deep Packet Inspection (DPI) device and an operation procedure thereof that have a function to detect a protocol used for transmission of a packet, an application using a packet or the like.

### [Background Art]

The DPI device have the function to detect the protocol used for transmission of the packet, the application using the packet or the like from information that is included by a packet flowing through a network. A file that records characteristics of the protocol and the application to be detected by the DPI device is referred to as a protocol library (or an application definition file). The DPI device detects characteristics (that is, the protocol or the application) of inputted packets by using the protocol library which the DPI device holds. As an art related to a function to automatically update the protocol library held by the DPI device, a function of a computer virus detection device to automatically update a virus definition file is known. The computer virus detection device is described, for example, by a patent literature (PTL) 1.

A general computer virus detection device provides the function to automatically update the virus definition file by use of an anti-virus program. An automatic update agent included in the anti-virus program periodically checks whether there is the latest virus definition file in a download server existing in the Internet. When there is the latest virus definition file in the download server, the automatic update agent downloads the latest virus definition file, and updates the old virus definition file that has been stored by the computer virus detection device.

As an art that is related to the present invention, PTL 2 describes an input-output device that has a function to determine whether header information of a data packet agrees with header information registered with a flow table. PTL 3 describes a disk drive device that has a function to determine that timing for updating a correction table has come when an average value of position errors continuously exceeds a threshold value.

### [Citation List]

### [Patent Literature]

[PTL 1] Japanese Patent Application Laid-Open No. 2003-186687
[PTL 2] Japanese Patent Application Laid-Open No. 2014-236268
[PTL 3] Japanese Patent Application Laid-Open No. 1998-021662

### [Summary of Invention]

### [Technical Problem]

There is a case that a packet put into the DPI device includes a unknown application which is not registered with the protocol library held by the DPI device, or an application which is known but which the DPI device cannot detect because of version-up of the application. In the above-mentioned case, it is necessary to update the protocol library that the DPI device holds. By applying the general art for updating the virus definition file to the DPI device, the DPI device, which has the function to periodically check whether there is the latest protocol library in the download server or not, is realized.

However, the DPI device cannot solely determine whether the protocol library held by the DPI device becomes obsolete or not. As a result, at a period of time after the latest protocol library is laid open by the download server until the DPI device detects the update by the DPI device's periodically accessing the download server, the DPI device is forced to use the protocol library of the old edition. During the period of time, there is a possibility that false detection or omission of detection occurs in the DPI device since the protocol library is not the latest edition.

As mentioned above, the general DPI cannot solely determine whether the protocol library needs to be updated or not, and consequently there is the possibility that the false detection or the omission of detection occurs since the protocol library is not the latest edition.

PTL 2 describes a function to determine whether an inspection key that is registered with an inspection key table is included or not. However, PTL 2 does not describes a problem which is caused when the inspection key table becomes obsolete, and an update procedure for the obsolete inspection key table. PTL 3 describes an art of measuring a prescribed quantity and updating a table according to the measured contents. However, PTL 3 is an invention related to correction of an error of a head position of a disk device, and does not disclose a procedure to solve the above-mentioned problem of the DPI device.

### (Object of Invention)

An object of the present invention is to provide an art to allow the DPI device to solely determine whether the protocol library needs to be updated or not.

### [Solution to Problem]

A packet analysis device according to the present invention is provided with: a protocol library that stores one or more characteristics of a packet to be inspected; an inspection means that detects whether the characteristic is included in inputted packets based on contents of the protocol library; a counting means that counts, for each characteristic in a prescribed period of time, number of pieces of traffic of the inputted packets from which the characteristics are detected and number of pieces of traffic of the inputted packets from which the characteristics are not detected; and an analysis means that determines whether an update of the protocol library is necessary based on the count result by the counting means, and downloads a newer protocol library from a download server when the update is necessary.

A packet analysis method according to the present invention is provided with: based on contents of a protocol library that stores one or more characteristics of a packet to be inspected, detecting whether the characteristic is included in inputted packets; counting, for each characteristic in a prescribed period of time, number of pieces of traffic of the inputted packets from which the characteristics are detected and number of pieces of traffic of the inputted packets from which the characteristics are not detected; determining whether an update of the protocol library is necessary based on the count result; and downloading a newer protocol library from a download server when the update is necessary.

A packet analysis program according to the present invention makes a computer of a packet analysis device execute: a procedure of detecting, based on contents of a protocol library that stores one or more characteristics of a packet to be inspected, whether the characteristic is included in inputted packets; a procedure of counting, for each characteristic in a prescribed period of time, number of pieces of traffic of the inputted packets from which the characteristics are detected and number of pieces of traffic of the inputted packets from which the characteristics are not detected; a procedure of determining whether an update of the protocol library is necessary based on the count result; and a procedure of downloading a newer protocol library from a download server when the update is necessary.

### [Advantageous Effects of Invention]

The packet analysis device and the packet analysis method can bring about an effect that the packet analysis device can solely determine whether the protocol library needs to be updated.

### [Brief Description of Drawings]

[FIG. 1] A block diagram illustrating a configuration of a packet analysis system 100 of a first example embodiment
[FIG. 2] A block diagram illustrating an example of a configuration including a DPI device 13 and a download server 14
[FIG. 3] A flowchart illustrating an example of an operation procedure of the DPI device 13
[FIG. 4] A diagram exemplifying an analysis result list 24
[FIG. 5] A flowchart illustrating a first processing procedure of an analysis module 23
[FIG. 6] A flowchart illustrating a second processing procedure of the analysis module 23
[FIG. 7] A diagram exemplifying the analysis result list 24 to which an analysis result is added

### [Description of Embodiments]

### (Outline of example embodiment)

According to an example embodiment which will be explained later, based on an analysis result on a situation of detecting an application or a protocol, a DPI device solely determines whether a protocol library needs to be updated or not. The DPI device determines need of update of the protocol library based on the analysis result. Furthermore, the DPI device uploads an analysis result list to a download server. The analysis result list describes a result on determination whether the protocol library held by the DPI device needs to be updated or not. By uploading the analysis result list to the download server, it is possible to notify a maintenance person that the protocol library of the download server needs to be made latest.

### (First example embodiment)

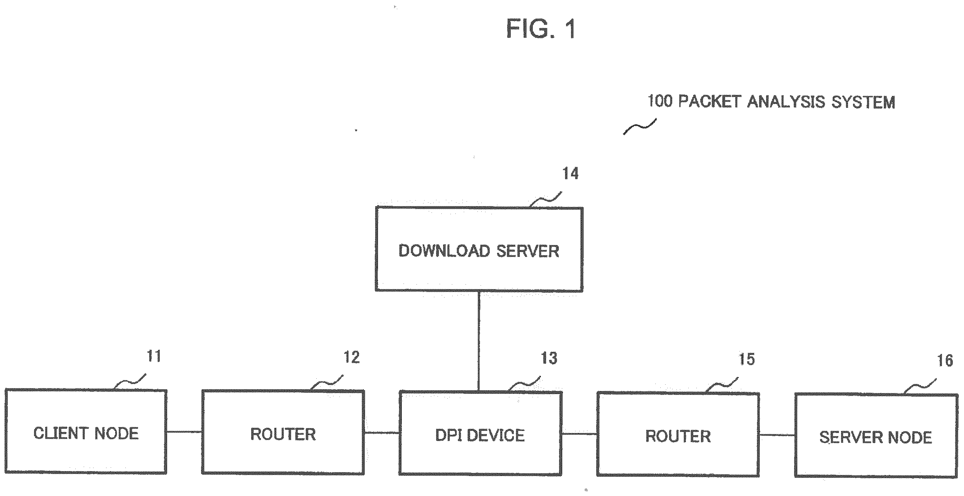

FIG. 1 is a block diagram illustrating a configuration of a packet analysis system 100 of a first example embodiment of the present invention. The packet analysis system 100 includes a client node 11, routers 12 and 15, a DPI device 13, a download server 14, and a server node 16. The router 12 is connected with the client node 11 and the DPI device 13. The router 15 is connected with the DPI device 13 and the server node 16. The DPI device 13 is coupled with the routers 12 and 15 and the download server 14. IP (Internet Protocol) packet communication is carried out between the client node 11 and the server node 16 through the routers 12 and 15 and the DPI device 13.

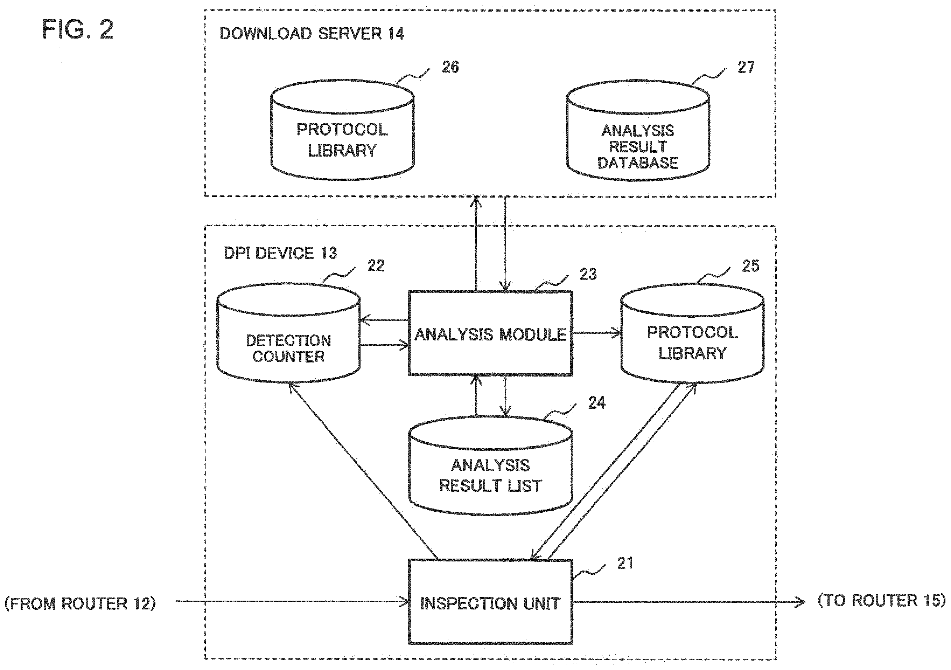

FIG. 2 is a block diagram illustrating an example of a configuration including the DPI device 13 and the download server 14. IP packets are put into the DPI device 13 from the router 12 and the router 15. FIG. 2 exemplifies a case that an IP packet is put into an inspection unit 21 from the router 12, and is inspected by the inspection unit 21, and then the inspected IP packet is outputted to the router 15. The DPI device 13 carries out the same operation also to an IP packet inputted from the router 15, and outputs an inspected IP packet to the router 12.

The DPI device 13 includes the inspection unit 21, a detection counter 22, an analysis module 23, an analysis result list 24, and a protocol library 25.

The protocol library 25 in the DPI device 13 is data which include a characteristic of a protocol that is used for transmission of a packet to be detected, and a characteristic of an application that uses the packet. The protocol library 25 may be recorded by a hard magnetic disk or a semiconductor memory. With reference to contents of the protocol library 25, the inspection unit 21 surveys whether the inputted IP packet includes the characteristic that is recorded by the protocol library 25. That is, by comparing the characteristics recorded by the protocol library 25, and contents of the IP packet, the inspection unit 21 detects the protocol that is used for transmission of the packet, or the application that uses the IP packet. The inspection unit 21 may include an electronic circuit.

The detection counter 22 counts number of all packets that are put into the inspection unit 21 and are targets for detecting the characteristic, number of applications from which the characteristics are detected successfully and number of applications from which the characteristics cannot be detected, and holds each number. The detection counter 22 may include a counter circuit and a memory. The analysis module 23 makes the analysis result list 24 based on an analysis of the count result that is outputted by the detection counter 22, and determines whether the protocol library 25 needs to be updated.

When determining that the protocol library 25 needs to be updated, the analysis module 23 downloads a protocol library 26 from the download server 14, and stores the protocol library 26 in the protocol library 25. As mentioned above, contents of the protocol library 25 is updated by contents of the protocol library 26.

The download server 14 is, for example, a server device and includes the protocol library 26 that is data for updating the protocol library 25 of the DPI device 13, and an analysis result database 27. The analysis result database 27 stores the analysis result list 24 that is uploaded from the DPI device 13. The analysis result list 24 will be mentioned later. The protocol library 26 and the analysis result database 27 of the download server 14 are data which are recorded, for example, by a hard magnetic disk or a semiconductor memory.

### (Operation of first example embodiment)

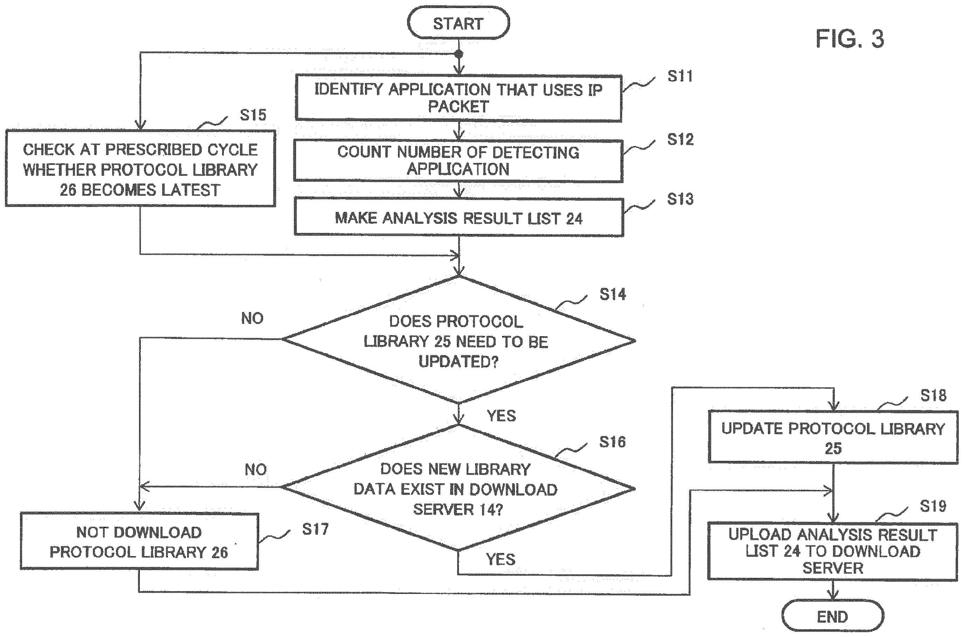

An operation of the packet analysis system 100 of the present example embodiment will be explained in the following with reference to FIG. 3. FIG. 3 is a flowchart illustrating an example of an operation procedure of the DPI device 13. In the present example embodiment, a case that the DPI device 13 detects the application that uses the inputted IP packet will be explained. However, the DPI device 13 may detect the protocol that is used for transmission of the IP packet and may detect both of the protocol and the application. Moreover, a target of detection is not limited to the protocol and the application. For example, an IP address or an http (hypertext transfer protocol) address that is included in the IP packet may be the target of detection. The characteristic that is the target of detection is recorded by the protocol library 25.

When the IP packet is put into the DPI device 13, the inspection unit 21 detects the application that uses the IP packet with reference to the protocol library 25 and identifies the application (Step S11 of FIG. 3). The detection counter 22 counts number of times of detecting the application in Step S11 and number of times of not detecting the application (Step S12). The detection counter 22 counts the number of times of detecting the application, for example, in units of packets or in units of transactions.

The analysis module 23 analyzes the number of count outputted by the detection counter 22, and makes the analysis result list 24 (Step S13), and determines whether the protocol library 25 needs to be updated (Step S14). A procedure for determining need of the update will be mentioned later. Moreover, in parallel to the processes of S11 to S13, the analysis module 23 carries out a process of inquiry to the download server 14 at a prescribed period of time whether the protocol library 26 is made latest (Step S15).

When determining that the protocol library 25 needs to be updated (Yes in Step S14), the analysis module 23 checks whether there are data newer than the protocol library 25 in the protocol library 26 of the download server 14 (Step S16). When there are the new library data in the download server 14 (Yes in Step S16), the analysis module 23 downloads the protocol library 26 from the download server 14 and updates the protocol library 25 (Step S18).

Also when it is found in Step S15 that the protocol library 26 is newer than the protocol library 25, the analysis module 23 determines that the protocol library 25 needs to be updated, and carries out the process of Step S18.

When determining that the protocol library 25 does not need to be updated (No in Step S14), the analysis module 23 does not download the protocol library 26 (Step S17). Also when there are not library data newer than the library data held by the DPI device 13 in the download server 14 (No in Step S16), the analysis module 23 does not download the protocol library 26 (Step S17).

Following the process of Step S17 or S18, the analysis module 23 uploads the analysis result list 24 to the download server 14 (Step S19). The download server 14 stores the analysis result list 24 in the analysis result database 27. Here, when determining that the protocol library 25 does not need to be updated (No in Step S14), the analysis modules 23 may not upload the analysis result list 24 to the download server in Step S19 .

By carrying out the above-mentioned procedures, the DPI device 13 solely determines whether the protocol library held by the DPI device 13 needs to be updated, and updates the protocol library 25 as the need arises.

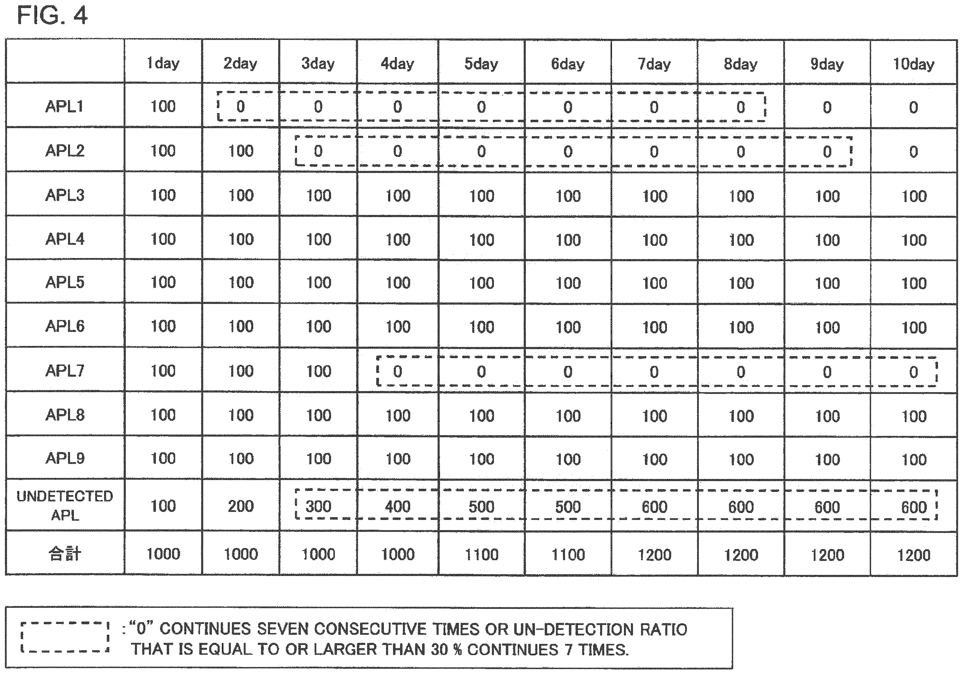

Next, operation procedures of the detection counter 22 and the analysis module 23 will be explained. FIG. 4 is a table illustrating an example of the analysis result list 24. The count result that is outputted by the detection counter 22 is written every day in the analysis result list 24 of FIG. 4. The number of times of detection of each application is stored in each row of APL 1 to APL 9 of the analysis result list 24. The APL 1 to the APL 9 represent nine kinds of applications that are different each other. Number of the applications is a mere example and is not limited to nine.

As mentioned above, the detection counter 22 counts the number of times of detection of each application, for example, in units of packet or units of transaction. The unit of the number of count in FIG. 4 is, for example, "number of packets" and "number of transactions", but it is not limited to these. The number of count at a time when the application is not detected is recorded in a row of "Undetected APL".

The detection counter 22 counts the number of times of detection of the application in units of a day and holds data of a total of 10 days as the number of times of detection. "1 day", "2 day", ..., and "10 day" in FIG. 4 represent the counting number of each of a first day, a second day, ..., a tenth day respectively. For example, number of times of detection of an application, which is corresponding to the APL 1, at the first day is 100. Moreover, if any applications are not detected 200 times at the second day, 200 is written in a cross point of the row of "Undetected APL" and a column of "2 day" as the counting number. The counting number of a row of "Total" is a total of the counting number of "APL 1" to the counting number of "APL 9" and the counting number of "Undetected APL". In the case of the analysis result list 24 of FIG. 4, the counting number of each day is collected and summed. However, a period of time for collecting and summing the counting number may be a shorter period of time, for example, every one hour, every ten minutes or the like. Alternatively, the period of time may be a longer period of time, for example, every week or the like.

In FIG. 4, a portion that is enclosed by a dotted line represents that "0" continues seven times, or that an undetected application ratio which is equal to or larger than 30 % continues for 7 days. The undetected application ratio means a ratio of the counting number that is described in the row of "Undetected APL" to the counting number described in the row of "Total".

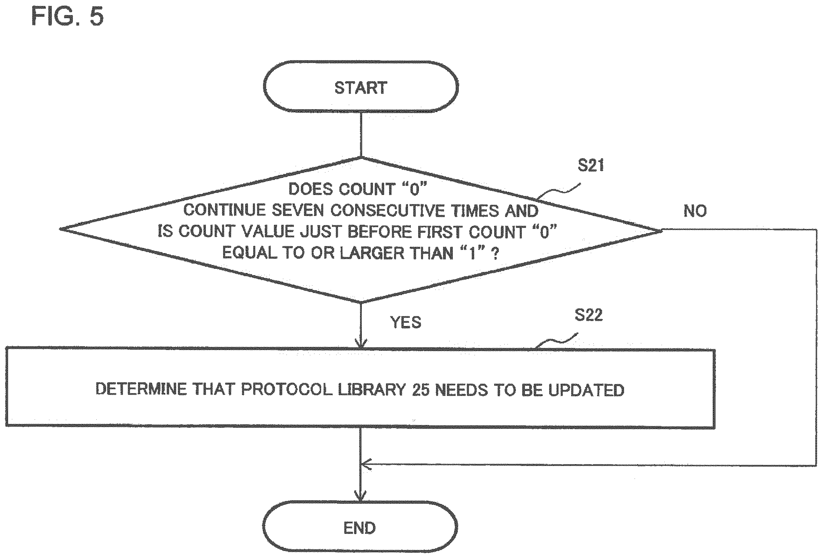

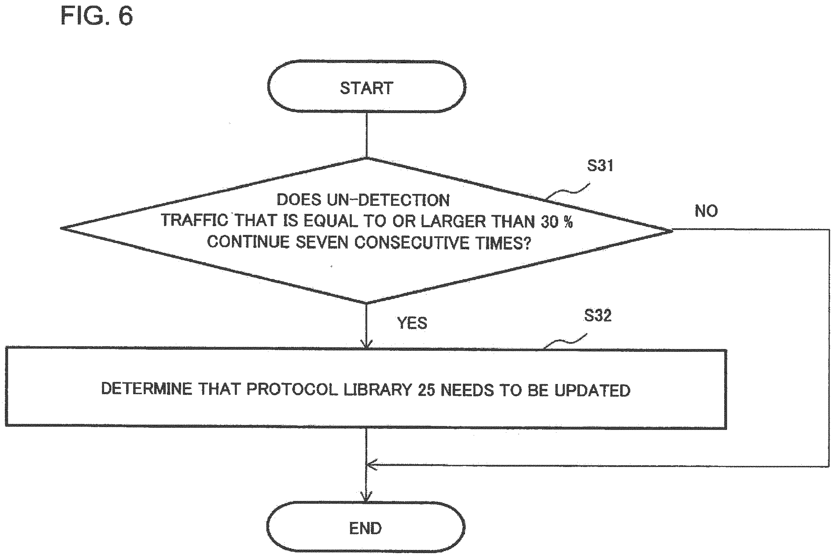

The analysis module 23 makes the analysis result list 24 illustrated in FIG. 4 based on the number of count that is outputted by the detection counter 22. Then, the analysis module 23 analyzes counter information according to processing flows illustrated in FIG. 5 and FIG. 6 and adds the analysis result to the analysis result list 24.

FIG. 5 and FIG. 6 are flowcharts illustrating a first processing procedure and a second processing procedure respectively that are carried out by the analysis module 23. Referring to FIG. 5, the analysis module 23 determines whether there is a case in a certain application that the counting number "0" continues seven consecutive times (that is, for 7 days), and the counting number just before the first counting number "0" is "1" or larger than "1" (Step S21 of FIG. 5). When the count result of any one of the applications satisfies the condition of Step S21 (Yes in Step S21), the analysis module 23 determines that the protocol library 25 needs to be updated (Step S22). In FIG. 4, "APL 1", "APL 2" and "APL 7" satisfy the "Yes" condition in Step 21. When the condition of Step S21 is not satisfied (No in Step S21), the analysis module 23 determines that the protocol library 25 does not need to be updated in Step 21. According to the procedure of FIG. 5, when there is an application that is not detected by prescribed number of consecutive times, the analysis module 23 determines that the protocol library 25 needs to be updated.

Referring to FIG. 6, the analysis module 23 determines whether there is an application whose ratio (un-detection ratio) of the counting number of the undetected APL to a whole of traffic is equal to or larger than 30% seven consecutive times (that is, for seven days) or not (Step S31 of FIG. 6). A whole of traffic means the counting number that is described in the row of "Total" of FIG. 4. When the condition of Step S31 is satisfied (Yes in Step S31), the analysis module 23 determines that the protocol library 25 needs to be updated (Step S32). When the condition of Step S31 is not satisfied (No in Step S31), the analysis module 23 determines that the protocol library 25 does not need to be updated. According to the procedure of FIG. 6, when the ratio of number of pieces of traffic, from which the application is not detected, to a whole of pieces of traffic is equal to or larger than a prescribed value by prescribed number of consecutive times, the analysis module 23 determines that the protocol library 25 needs to be updated.

The analysis module 23 may carry out the procedure of FIG. 5 or FIG. 6 every day based on the analysis result list 24 of past 10 days. According to the procedures of FIG. 5 and FIG. 6, on the presumption that degradation in the detected number or the detection ratio of the application is caused by obsoleted contents of the protocol library 25, the analysis module 23 determines that the protocol library 25 needs to be updated. The analysis module 23 may use both of the procedures of FIG. 5 and FIG. 6 together and may determine whether the current protocol library 25 needs to be updated. The detected number or the detection ratio of the application, by which it is determined that the protocol library 25 needs to be updated, may be determined based on permissible frequency of updating the protocol library 25, and the detected number or the detection ratio of the application that is required as the system. There is a possibility that the protocol library 25 needs to be updated frequently in order to keep the detected number or the detection ratio of the application large.

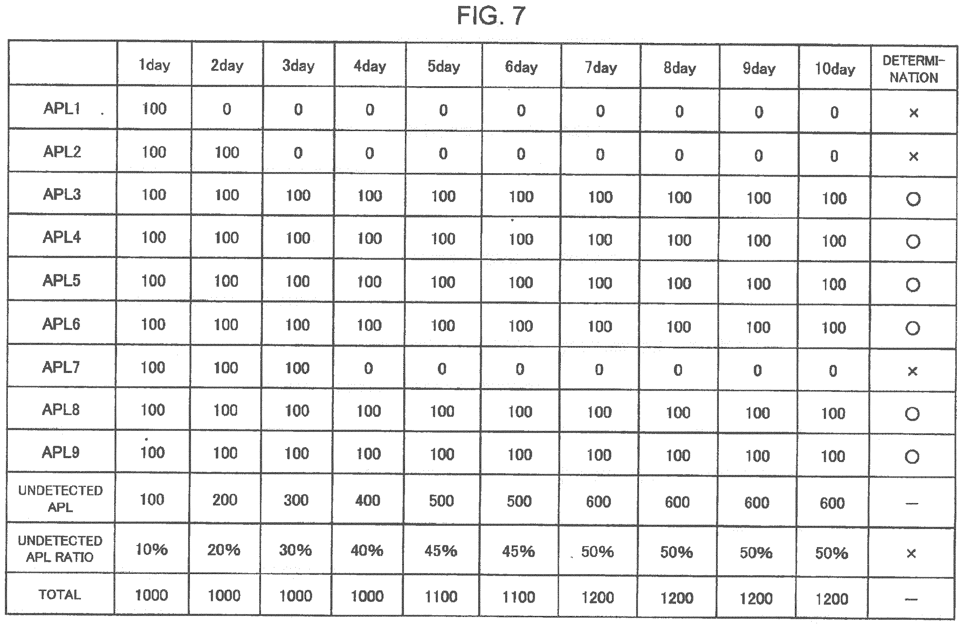

FIG. 7 is a diagram exemplifying the analysis result list 24 to which an analysis result is added. The analysis module 23 makes the analysis result list 24, that is exemplified in FIG. 7, based on the count result outputted by the detection counter 22, and the result on determination whether the protocol library 25 needs to be updated. The analysis module 23 adds the result of carrying out Step S14 (specifically, for example, the procedure of FIG. 5 or FIG. 6) to the analysis result list 24 of FIG. 4, which is made in Step S13 of FIG. 3, as the row of "Undetected APL ratio" and the column of "Determination", and consequently the analysis result list 24 of FIG. 7 is made. "Undetected APL ratio" is a ratio of the row of "Undetected APL" to the row of "Total".

In a cross point of the column of "Determination" and the rows of "APL 1" to "APL 9" of FIG. 7, a mark "X" represents an application whose detected number is determined to be degraded (that is, an application by which it is determined that the protocol library 25 needs to be updated). Other applications (that is, applications by which it is not determined that the protocol library 25 needs to be updated) are represented by a circle "○". Similarly, the mark "X" is added to a cross point of the column of "Determination" and the row of "Undetected APL ratio" of FIG. 7 when it is determined that the ratio of traffic from which the application is not detected increases, and the circle "○" is added to the cross point of the column of "Determination" and the row of "Undetected APL ratio" of FIG. 7 when it is not determined that the ratio of traffic from which the application is not detected increases. The DPI device 13 transmits the analysis result list 24 illustrated in FIG. 7 to the analysis result database 27 of the download server 14.

As explained in FIG. 7, when it is determined that the protocol library 25 needs to be updated and the protocol library 26 is newer than the protocol library 25, the DPI device 13 downloads the protocol library 26 and updates the protocol library 25.

Furthermore, when it is determined that the protocol library 25 needs to be updated, the mark "X" is added to the column of "Determination" of the analysis result list 24 that is transmitted to the download server 14. Accordingly, when it is determined that the protocol library 25 needs to be updated but the protocol library 26 is not newer than the protocol library 25, an operator of the download server 14 can know that the protocol library 26 needs to be updated.

The analysis module 23 may have a function to update the protocol library 25 by the protocol library 26 of the download server 14 in a prescribed cycle. Even if the protocol library 25 is updated periodically, by referring to the column of "Determination" of the analysis result list 24 illustrated in FIG. 7, the operator can know that the protocol library 25 has become obsolete during an update cycle.

### (Explanation of effect)

The packet analysis system 100 of the first example embodiment can determine whether the protocol library 25 needs to be updated by using only DPI device 13 without accessing the download server 14. The reason is that the DPI device 13 solely determines whether the protocol library 25 needs to be updated based on the detected number or the detection ratio of the application in the DPI device 13.

Then, the DPI device 13 can update the protocol library 25 automatically without waiting for periodical arrival of the update cycle. Thereby, the packet analysis system 100 can reduce the possibility that the false detection or the omission of detection due to the protocol library's not being the latest edition occurs. In other words, the packet analysis system 100 of the present example embodiment can know at an early time that the protocol library of the DPI device 13 has become obsolete.

Furthermore, even when the protocol library 25 held by the DPI device 13 needs to be updated but the latest protocol library 26 does not exist in the download server 14, the packet analysis system 100 can notify the operator whether the protocol library 26 needs to be updated by using the analysis result list 24.

### (Second example embodiment)

The DPI device 13 that is used in the packet analysis system 100 described in the first example embodiment can be generally referred to as a packet analysis device. Referring to FIG. 2, the packet analysis device includes the inspection unit 21, the detection counter 22, the analysis module 23, the analysis result list 24, and the protocol library 25. A configuration and an operation of the packet analysis device are similar to ones of the DPI device 13 of the first example embodiment.

The packet analysis device of the second example embodiment that has the above-mentioned configuration can determine whether the protocol library 25 needs to be updated according to the procedures that are explained with reference to FIG. 3, FIG. 5 and FIG. 6 of the first example embodiment without accessing the download server 14 by using only packet analysis device. Moreover, the packet analysis device of the present example embodiment can reduce the possibility that the false detection or the omission of detection due to the obsoleted protocol library.

Hereinbefore, the present invention has been explained with reference to the example embodiments, but the present invention is not limited to the example embodiments. It is possible to add various changes which those skilled in the art can understand to the composition and the details of the present invention within the scope of the present invention. Moreover, the numerical values that are used in explaining the example embodiments are exemplified values, and the contents of the invention are not limited to the numerical values of the example embodiments.

Furthermore, the functions and the operation procedures of the DPI device 13 of the first example embodiment and the packet analysis device of the second example embodiment may be realized by a central processing unit (central processing unit, CPU) carrying out a program. The program is recorded in a hard and non-transitory recording medium. As the recording medium, a semiconductor memory or a hard disk device are used but the recording medium is not limited to these. The CPU and the recording medium are the computer and the memory respectively that are included in the DPI device 13 of the first example embodiment or the packet analysis device of the second example embodiment.

This application is based upon and claims the benefit of priority from Japanese Patent Application No. 2015-103591, filed on May 21, 2015, the disclosure of which is incorporated herein in its entirety by reference.

### [Reference signs List]

- 100: Packet analysis system
- 11: Client node
- 12 and 15: Router
- 13: DPI device
- 14: Download server
- 16: Server node
- 21: Inspection unit
- 22: Detection counter
- 23: Analysis module
- 24: Analysis result list
- 25 and 26: Protocol library
- 27: Analysis result database

## Claims

1. A packet analysis device, comprising:
a protocol library for recording one or more characteristics of a packet to be inspected;
inspection means for detecting whether the characteristic is included in inputted packets based on contents of the protocol library;
counting means for counting, for each characteristic in a prescribed period of time, number of pieces of traffic of the inputted packets from which the characteristics are detected and number of pieces of traffic of the inputted packets from which the characteristics are not detected; and
analysis means for determining whether an update of the protocol library is necessary based on the count result by the counting means, and downloading a newer protocol library from a download server when the update is necessary.

2. The packet analysis device according to claim 1,
wherein
as the characteristic, the inspection means detects at least one of an application using the inputted packets and a protocol used for transmission of the inputted packets.

3. The packet analysis device according to claim 1 or 2, **characterized in that**:
either in units of packet or in units of transaction of packet, the counting means counts number of pieces of traffic from which the characteristics of the inputted packets are detected and number of pieces of traffic from which the characteristics of the inputted packets are not detected.

4. The packet analysis device according to any one of claims 1 to 3,
wherein
when number of pieces of traffic, from which the characteristics are detected in packets inputted before a first point of time, is equal to or larger than a first value, and number of pieces of traffic, from which the characteristics are detected in packets inputted after the first point of time, is smaller than the first value by prescribed number of consecutive times, the analysis means determines that the protocol library needs to be updated.

5. The packet analysis device according to any one of claims 1 to 4,
wherein
when a ratio of number of pieces of traffic, from which the characteristics are not detected after the first point of time, to all pieces of traffic of the inputted packets is equal to or larger than a second value by prescribed number of consecutive times, the analysis means determines that the protocol library needs to be updated.

6. The packet analysis device according to any one of claims 1 to 5,
wherein
the analysis means makes an analysis result list that includes a result on determination whether the protocol library needs to be updated, and notifies a maintenance person of the analysis result list when determining that the protocol library needs to be updated.

7. A packet analysis system, comprising:
the packet analysis device according to any one of claims 1 to 6;
the download server that is connected with the packet analysis device; and
one or more communication devices that transmit and receive packets via the packet analysis device.

8. A packet analysis method, comprising:
based on contents of a protocol library that stores one or more characteristics of a packet to be inspected, detecting whether the characteristic is included in inputted packets;
counting, for each characteristic in a prescribed period of time, number of pieces of traffic of the inputted packets from which the characteristics are detected and number of pieces of traffic of the inputted packets from which the characteristics are not detected;
determining whether an update of the protocol library is necessary based on the count result; and
downloading a newer protocol library from a download server when the update is necessary.

9. A program **characterized by** making a computer of a packet analysis device execute:
a procedure of detecting, based on contents of a protocol library recording one or more characteristics of a packet to be inspected, whether the characteristic is included in inputted packets ;
a procedure of counting, for each characteristic in a prescribed time period, number of pieces of traffic of the inputted packets from which the characteristics are detected and number of pieces of traffic of the inputted packets from which the characteristics are not detected;
a procedure of determining whether an update of the protocol library is necessary based on the count result; and
a procedure of downloading a newer protocol library from a download server when the update is necessary.

## Patentansprüche

1. Paketanalysevorrichtung, umfassend:
eine Protokollbibliothek zum Aufzeichnen einer oder mehrerer Merkmale eines zu prüfenden Pakets;
Prüfmittel zum Erkennen, ob das Merkmal in eingegebenen Paketen enthalten ist, basierend auf dem Inhalt der Protokollbibliothek;
Zählmittel zum Zählen, für jedes Merkmal in einem vorgegebenen Zeitraum, der Anzahl der Traffic-Stücke der eingegebenen Pakete, von denen die Merkmale erfasst werden, und der Anzahl der Traffic-Stücke der eingegebenen Pakete, von denen die Merkmale nicht erfasst werden; und
Analysemittel zum Bestimmen, basierend auf dem Zählergebnis durch das Zählmittel, ob eine Aktualisierung der Protokollbibliothek notwendig ist, und zum Herunterladen einer neueren Protokollbibliothek von einem Downloadserver, wenn die Aktualisierung erforderlich ist.

2. Die Paketanalysevorrichtung nach Anspruch 1,
wobei
das Prüfmittel als Merkmal mindestens eine Anwendung erkennt, die die eingegebenen Pakete und ein Protokoll verwendet, das für die Übertragung der eingegebenen Pakete verwendet wird.

3. Die Paketanalysevorrichtung nach Anspruch 1 oder 2, **dadurch gekennzeichnet, dass**:
die Zählmittel entweder in Paketeinheiten oder in Transaktionseinheiten von Paketen die Anzahl der Traffic-Stücke zählen, aus denen die Eigenschaften der eingegebenen Pakete ermittelt werden, und die Anzahl der Traffic-Stücke, aus denen die Eigenschaften der eingegebenen Pakete nicht erfasst werden.

4. Die Paketanalysevorrichtung nach einem der Ansprüche 1 bis 3,
wobei
wenn die Anzahl der Traffic-Stücke, aus denen die Merkmale in Paketen erfasst werden, die vor einem ersten Zeitpunkt eingegeben wurden, gleich oder größer als ein erster Wert ist, und die Anzahl der Traffic-Stücke, aus denen die Merkmale in Paketen erfasst werden, die nach dem ersten Zeitpunkt eingegeben wurden, kleiner als der erste Wert um eine vorgeschriebene Anzahl aufeinanderfolgender Male ist, die Analyseneinrichtung bestimmt, dass die Protokollbibliothek aktualisiert werden muss.

5. Die Paketanalysevorrichtung nach einem der Ansprüche 1 bis 4,
wobei
wenn ein Verhältnis der Anzahl der Traffic-Stücke, aus denen die Merkmale nach dem ersten Zeitpunkt nicht erkannt werden, zu allen Traffic-Stücken der eingegebenen Pakete um eine vorgeschriebene Anzahl aufeinanderfolgender Male gleich oder größer als ein zweiter Wert ist, die Analyseeinrichtung bestimmt, dass die Protokollbibliothek aktualisiert werden muss.

6. Die Paketanalysevorrichtung nach einem der Ansprüche 1 bis 5,
wobei
die Analyseneinrichtung eine Analyseergebnisliste erstellt, die ein Ergebnis zu der Feststellung enthält, ob die Protokollbibliothek aktualisiert werden muss, und eine Wartungsperson über die Analyseergebnisliste benachrichtigt, wenn bestimmt wird, dass die Protokollbibliothek aktualisiert werden muss.

7. Ein Paketanalysesystem, umfassend:
die Paketanalysevorrichtung nach einem der Ansprüche 1 bis 6;
den Download-Server, der mit der Paketanalysevorrichtung verbunden ist; und
eine oder mehrere Kommunikationsvorrichtungen, die Pakete über die Paketanalysevorrichtung senden und empfangen.

8. Paketanalyseverfahren, umfassend:
basierend auf dem Inhalt einer Protokollbibliothek, die ein oder mehrere Merkmale eines zu prüfenden Pakets speichert und erkennt, ob das Merkmal in eingegebenen Paketen enthalten ist;
Zählen, für jedes Merkmal in einem vorgegebenen Zeitraum, der Anzahl der Traffic-Stücke der eingegebenen Pakete, von denen die Merkmale erfasst werden, und der Anzahl der Traffic-Stücke der eingegebenen Pakete, von denen die Merkmale nicht erfasst werden;
Bestimmen, ob eine Aktualisierung der Protokollbibliothek erforderlich ist, basierend auf dem Zählergebnis; und
Herunterladen einer neueren Protokollbibliothek von einem Download-Server, wenn das Update erforderlich ist.

9. Programm **gekennzeichnet dadurch, dass** es einen Computer einer Paketanalysevorrichtung veranlasst, auszuführen:
ein Verfahren zum Erfassen, basierend auf dem Inhalt einer Protokollbibliothek, die ein oder mehrere Merkmale eines zu prüfenden Pakets aufzeichnet, ob das Merkmal in eingegebenen Paketen enthalten ist;
ein Verfahren zum Zählen, für jedes Merkmal in einem vorgegebenen Zeitraum, der Anzahl der Traffic-Stücke der eingegebenen Pakete, von denen die Merkmale erfasst werden, und der Anzahl der Traffic-Stücke der eingegebenen Pakete, von denen die Merkmale nicht erfasst werden;
ein Verfahren zum Bestimmen, ob eine Aktualisierung der Protokollbibliothek basierend auf dem Zählergebnis erforderlich ist; und
ein Verfahren zum Herunterladen einer neueren Protokollbibliothek von einem Download-Server, wenn das Update erforderlich ist.

## Revendications

1. Dispositif d'analyse de paquet, comprenant :
une bibliothèque de protocole pour enregistrer une ou plusieurs caractéristiques d'un paquet à inspecter ;
des moyens d'inspection pour détecter si la caractéristique est incluse dans des paquets entrés sur la base du contenu de la bibliothèque de protocole ;
des moyens de comptage pour compter, pour chaque caractéristique dans une période de temps prescrite, le nombre d'éléments de trafic des paquets entrés à partir desquels les caractéristiques sont détectées et le nombre d'éléments de trafic des paquets entrés à partir desquels les caractéristiques ne sont pas détectées ; et
des moyens d'analyse pour déterminer si une mise à jour de la bibliothèque de protocole est nécessaire sur la base du résultat de comptage des moyens de comptage, et télécharger une bibliothèque de protocole plus récente à partir d'un serveur de téléchargement lorsque la mise à jour est nécessaire.

2. Dispositif d'analyse de paquet selon la revendication 1,
dans lequel
en tant que caractéristique, les moyens d'inspection détectent au moins l'un d'une application utilisant les paquets entrés et d'un protocole utilisé pour la transmission des paquets entrés.

3. Dispositif d'analyse de paquet selon la revendication 1 ou 2, **caractérisé en ce que** :
soit en unités de paquet, soit en unités de transaction de paquet, les moyens de comptage comptent le nombre d'éléments de trafic à partir desquels les caractéristiques des paquets entrés sont détectées et le nombre d'éléments de trafic à partir desquels les caractéristiques des paquets entrés ne sont pas détectées.

4. Dispositif d'analyse de paquet selon l'une quelconque des revendications 1 à 3,
dans lequel
lorsque le nombre d'éléments de trafic, à partir desquels les caractéristiques sont détectées dans les paquets entrés avant un premier instant, est supérieur ou égal à une première valeur, et le nombre d'éléments de trafic, à partir desquels les caractéristiques sont détectées dans les paquets entrés après le premier instant, est inférieur à la première valeur d'un nombre prescrit d'instants consécutifs, les moyens d'analyse déterminent que la bibliothèque de protocole doit être mise à jour.

5. Dispositif d'analyse de paquet selon l'une quelconque des revendications 1 à 4,
dans lequel
lorsqu'un rapport entre le nombre d'éléments de trafic, à partir desquels les caractéristiques ne sont pas détectées après le premier instant, et tous les éléments de trafic des paquets entrés est supérieur ou égal à une deuxième valeur d'un nombre prescrit d'instants consécutifs, les moyens d'analyse déterminent que la bibliothèque de protocole doit être mise à jour.

6. Dispositif d'analyse de paquet selon l'une quelconque des revendications 1 à 5,
dans lequel
les moyens d'analyse réalisent une liste de résultats d'analyse qui comprend un résultat concernant la détermination si la bibliothèque de protocole doit être mise à jour, et notifie, à une personne de maintenance, la liste de résultats d'analyse lorsqu'il est déterminé que la bibliothèque de protocole doit être mise à jour,

7. Système d'analyse de paquet, comprenant :
le dispositif d'analyse de paquet selon l'une quelconque des revendications 1 à 6 ;
le serveur de téléchargement qui est connecté au dispositif d'analyse de paquet ; et
un ou plusieurs dispositifs de communication qui transmettent et reçoivent des paquets par l'intermédiaire du dispositif d'analyse de paquet.

8. Procédé d'analyse de paquet, comprenant :
sur la base du contenu d'une bibliothèque de protocole qui mémorise une ou plusieurs caractéristiques d'un paquet à inspecter, la détection si la caractéristique est incluse dans des paquets entrés ;
le comptage, pour chaque caractéristique dans une période de temps prescrite, du nombre d'éléments de trafic des paquets entrés à partir desquels les caractéristiques sont détectées et du nombre d'éléments de trafic des paquets entrés à partir desquels les caractéristiques ne sont pas détectées ;
la détermination si une mise à jour de la bibliothèque de protocole est nécessaire sur la base du résultat de comptage ; et
le téléchargement d'une bibliothèque de protocole plus récente à partir d'un serveur de téléchargement lorsque la mise à jour est nécessaire.

9. Programme **caractérisé en ce qu'**il amène un ordinateur d'un dispositif d'analyse de paquet à exécuter :
une procédure de détection, sur la base du contenu d'une bibliothèque de protocole enregistrant une ou plusieurs caractéristiques d'un paquet à inspecter, si la caractéristique est incluse dans les paquets entrés ;
une procédure de comptage, pour chaque caractéristique dans une période de temps prescrite, du nombre d'éléments de trafic des paquets entrés à partir desquels les caractéristiques sont détectées et du nombre d'éléments de trafic des paquets entrés à partir desquels les caractéristiques ne sont pas détectées ;
une procédure de détermination si une mise à jour de la bibliothèque de protocole est nécessaire sur la base du résultat de comptage ; et
une procédure de téléchargement d'une bibliothèque de protocole plus récente à partir d'un serveur de téléchargement lorsque la mise à jour est nécessaire.
